Europäisches Patentamt

European Patent Office

Office européen des brevets

(19)

(11) Veröffentlichungsnummer: **0 273 027**
A2

(12) # EUROPÄISCHE PATENTANMELDUNG

(21) Anmeldenummer: 87890287.3

(22) Anmeldetag: 15.12.87

(51) Int. Cl.⁴: **F 23 C 1/02**
F 23 B 1/36, F 23 M 9/06,
F 23 L 15/04
// F23G5/12, F23G5/16

(30) Priorität: 24.12.86 AT 3436/86

(43) Veröffentlichungstag der Anmeldung:
29.06.88 Patentblatt 88/26

(84) Benannte Vertragsstaaten:
AT BE CH DE FR GB LI LU NL SE

(71) Anmelder: **Prossegger, Franz**
**Bichein 42**
**A-5733 Bramberg (AT)**

(72) Erfinder: **Prossegger, Franz**
**Bichein 42**
**A-5733 Bramberg (AT)**

(54) **Heizkessel für feste und flüssige Brennstoffe.**

(57) Heizkessel für feste und flüssige Brennstoffe, mit einem Wassermantel, einem unten durch einen Rost abgeschlossenen Füllschacht (2), mit einem, an der Kesselrückseite in den Luftkanal (9') eingebauten Brenner (13) für flüssige Brennstoffe, der parallel zur Kessellängsachse entgegen dem Sinne des Zuges, in die horizontale Einzugskammer (4) mündet, die mit der nach oben erweiternden Zugschleuse (5), die dem Füllschacht (2) nachgeschaltete Brennkammer bildet, einer Rotationsnachverbrennungszone im Durchlaß der Einzugskammer (4) zur Zugschleuse (5), und dem obenliegenden Abgasrohr (8), das zur Vorwärmung der Frischluft dient, die dem Brenner (13) und dem Außenrotationsbereich (20) zugeführt wird.

FIG. 1

FIG. 2

EP 0 273 027 A2

# Beschreibung

Die Erfindung bezieht sich auf Heizkessel für feste und flüssige Brennstoffe, mit einem Wassermantel, und einem unten durch einen Rost abgeschlossenen Füllschacht, mit nachgeschalteter Brennkammer.

Bei bekannten Verbrennungsanlagen ist es möglich, entweder Festbrennstoffe, oder durch einen, in die Aschentüre eingehängten Brenner, flüssige Brennstoffe zu verheizen, durch das Einblasen der Brennerflamme im Sinne des Zuges wird aber ein schlechter Wirkungsgrad erreicht, außerdem ist das Anfeuern von Festbrennstoffen mit dem Brenner teilweise unmöglich. Dann sind Heizkessel bekannt, die mit einem Ölbrenner betrieben werden, und mit demselben Festbrennstoffe anfeuern, oder verbrennen können, wobei der Brenner quer zur Abbrandrichtung in den Durchlaß zur nachgeschalteten Brennkammer mündet, sowie Festbrennstoffkessel mit separater Brennkammer für den Ölbrenner.

Die genannten Heizkessel haben den Nachteil, daß die Brennstoffausnützung, besonders bei Ölverbrennung, infolge ungünstiger Brennkammern, nicht den Erwartungen entspricht, weiters ergeben sich beim Verbrennen von schwer zündbaren festen Stoffen, mit dem Ölbrenner, ungenügende Verbrennung derer, bei relativ hohen Abgasemissionen.

Die Erfindung beseitigt diese Nachteile dadurch, daß an der Kesselrückseite ein, in den Luftkanal eingebauter Brenner für flüssigen Brennstoff, z.B. Ölbrenner, in die horizontale Einzugskammer mündet, die mit der nach oben erweiternden Zugschleuse, die dem Füllschacht nachgeschaltete Brennkammer bildet, wobei der Brenner vorgewärmte Frischluft ansaugt, und die Brennerflamme entgegen dem Sinne des Zuges in die Einzugskammer brennt, sowie einer, im Durchlaß der Einzugskammer zur Zugschleuse angeordneten Rotationskammer, in der die Flammen und Verbrennungsgase mit erhitzter Frischluft nachverbrannt werden.

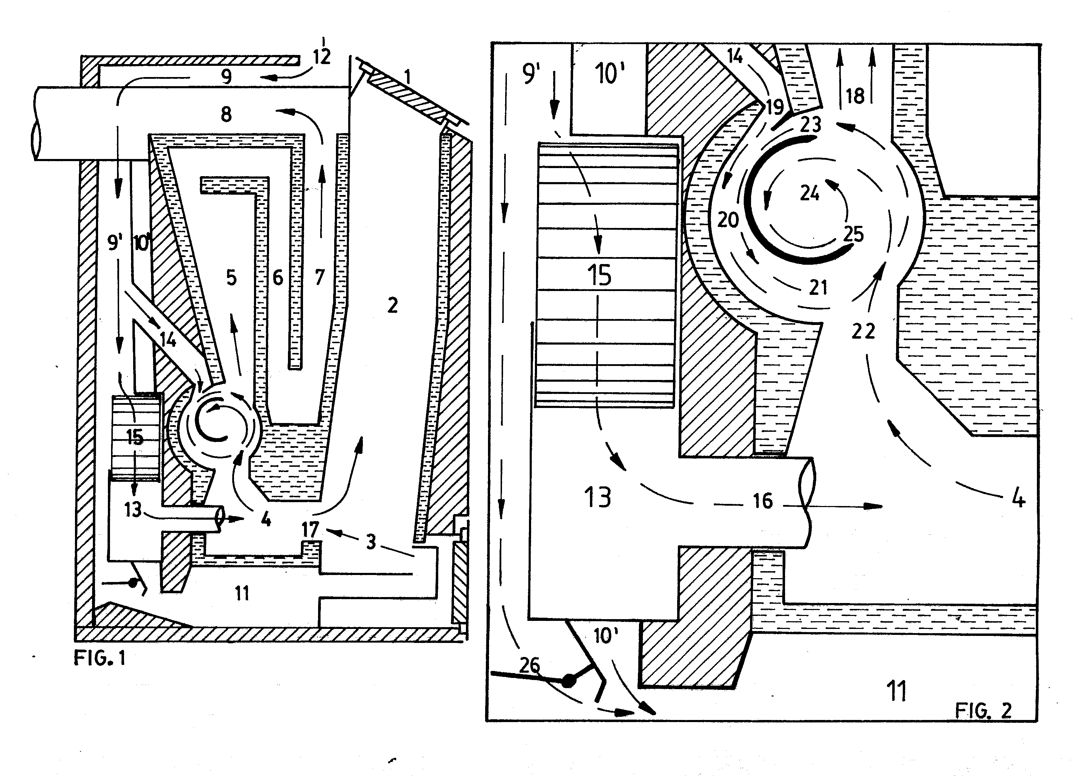

Die Erfindung wird anhand der Zeichnungen Fig. 1 und Fig. 2 näher erläutert.

An der Heizkesselrückseite mündet durch die, in der Kesselmitte angebrachte Öffnung (16), bei breiteren Kesselausführungen werden mehrere Öffnungen in gleicher Höhe für mehrere Brenner vorgesehen, ein in den Luftkanal (9') eingebauter Brenner (13) für flüssigen Brennstoff, in die horizontale Einzugskammer (4). Diese Anordnung ermöglicht es, dem Brenner (13) mit dessen Gebläse (15), vom Luftvorwärmekanal (9), der am als Wärmetauscher ausgebildeten Abgasrohr (8) anliegend, die zur Verbrennung notwendige Luft auf Abgastemperatur erhitzt, heiße Frischluft zuzuführen, wodurch eine extrem heiße Verbrennungsflamme bei guter Brennstoffausnützung entsteht. Die der Festbrennstoffabbrandrichtung, verlaufend von der Abbrandzone (3) durch die Einzugskammer (4) und der Zugschleuse (5) zu den Abgaszügen (6,7), entgegengesetzte Einblasrichtung der Brennerflamme in die Einzugskammer (4), wobei das Brennerrohr parallel zur Kessellängsachse verläuft, erzeugt in der Einzugskammer (4) einen Hitzestau, sodaß der Füllschacht (2) zusätzlich als Brennkammer wirkt, da die Verbrennungsgase vom Füllschacht (2), in Kanälen seitlich am Abgasrohr (8) entlang zum Schwelgaskanal (10') abziehen können, der die Verbrennungsgase wieder der Abbrandzone (3) zuführt, wo sie infolge des Überdruckes durch die Einzugskammer (4), an der Brennerflamme vorbei, in die Zugschleuse (5) strömen. Die Verengung (17) im Durchlaß der Abbrandzone (3) zur Einzugskammer (4) erhöht den Hitzestau bei Ölbetrieb des Heizkessels, und unterstützt beim Verbrennen, von im Füllschacht (2) der Abbrandzone (3) zugeführten Müll, oder schwer entflammbaren Stoffen mit dem Ölbrenner (13), die Schwelgasbildung im Füllschacht (2), sodaß sich aus entsprechender Vorvergasung der zu verbrennenden Stoffe genügende Brennbarkeit derer ergibt.

Vorrangig ist der Brenner (13) dafür bestimmt, den für Festbrennstoffe vorgesehenen Heizkessel nach Art eines Ölofens zu betreiben, sowie zum Verfeuern von minderen, im Füllschacht (2) der Abbrandzone (3) zugeführten Brennstoffen, oder zur Inbetriebnahme der Anlage bei schwer brennbaren Stoffen.

Da der Schadstoffanteil und Stickoxidgehalt dieser Materialien hohe Umweltbelastung hervorrufen würde, ist im Durchlaß der Einzugskammer (4) zur Zugschleuse (5) eine Rotationskammer vorgesehen. Es handelt sich hierbei um ein quer zur Abbrandrichtung waagrecht angeordnetes Rohr. dar in Längsrichtung die Durchlässe, unten den Flammeneinlaß (22), oben den Flammenauslaß (18), und den Frischlufteinlaß (19), der über den Kanal (14) mit dem Frischluftkanal (9') verbunden ist, sowie dem außermittig in die Rotationskammer eingehängten halbmondförmigen Strömungsleitblech (25), welches die Kammer in die Bereiche Innenrotation (24) und Außenrotation (20) teilt. Die hohe Saugwirkung der Zugschleuse (5) auf den Flammenauslaß (18), durch die Rotationskammer auf den Flammeneinlaß (22) fortpflanzend, der gegenüber dem Auslaß (18) einen geänderten Querschnitt aufweist, sodaß am Einlaß (22) die Strömungsgeschwindigkeit höher ist, ergibt sich nach dem Einsaugen der Flammen durch Einlaß (22) in die Rotationskammer ein Abbremsen der Flammen, wodurch die Drehung derer im Innen rotationsbereich (24) hervorgerufen wird. Da der auf den Flammeneinlaß (22) wirkende Sog auch auf den Auslauf (21) des Aussenrotationsbereiches (20) Vakuum ausübt, wird am Außenrotationseinlauf (23), Heißgas, der in die Zugschleuse (5) schlagenden Flammen, in Drehrichtung eingesaugt, und mit der am Abgasrohr (8), im Vorwärmekanal (9) erhitzten Frischluft, die im Lufteinlaß (19), in den Außenrotationsbereich (20) gelangt, wo sich Heißgase und erhitzte Frischluft vermischen, und nach dem Aussenrotationsauslauf (21) mit den, durch den Einlaß (22), in die Rotationskammer eingesaugten Flammen verwirbeln, und nachverbrennen, wobei die Umwälzung der Flammen und Gase im Innenbereich (24) noch verstärkt wird.

Die Vorwärmung der, dem Brenner (13) und dem Außenrotationsbereich (20) zugeführten Frischluft erfolgt in der Art, daß sich durch das Anlegen, des ins Abgasrohr (8) mündenden Abgaszuges (7), an die innere Füllschachtwand, die Abgasrohroberfläche wesentlich vergrößerte, wobei das Abgasrohr (8) als Wärmetauscher ausgebildet, vom Luftvorwärmekanal (9) umgeben ist. Die im Einlaß (12) an der Kesseloberseite in den Luftvorwärmekanal (9) einströmende Frischluft streicht, sich am heißen Abgasrohr (8) erhitzend zur Kesselrückseite, und weiter in den Luftkanal (9'). Die langsame Strömungsgeschwindigkeit im Luftvorwärmekanal (9) ermöglicht einen optimalen Temperaturaustausch vom Abgasrohr (8) an die angesaugte Frischluft, mit gleichzeitiger Absenkung der Rauchgastemperatur.

## Patentansprüche

1.) Heizkessel für feste und flüssige Brennstoffe, mit einem Wassermantel, und einem unten durch einen Rost abgeschlossenen Füllschacht, mit nachgeschalteter Brennkammer, dadurch gekennzeichnet, daß an der Kesselrückseite ein in den Luftkanal (9') eingebauter Brenner (13) für flüssigen Brennstoff, z.B. Ölbrenner, in die horizontale Einzugskammer (4) mündet, die mit der nach oben erweiternden Zugschleuse (5), die dem Füllschacht (2) nachgeschaltete Brennkammer bildet, wobei der Brenner (13) vorgewärmte Frischluft ansaugt, und einer, im Durchlaß der Einzugskammer (4) zur Zugschleuse (5) angeordneten Rotationskammer, in der die Flammen und Verbrennungsgase mit erhitzter Frischluft verwirbelt und nachverbrannt werden.

2.) Heizkessel nach Anspruch 1, dadurch gekennzeichnet, daß der Brenner (13) die Flamme entgegen dem Sinne des Zuges in die Einzugskammer (4) brennt, und das Brennerrohr parallel zur Kessellängsachse verläuft.

3.) Heizkessel nach Anspruch 1, dadurch gekennzeichnet, daß die Rotationskammer aus einem quer zur Abbrandrichtung, waagrecht angeordneten Rohr besteht, das nach unten und oben Durchlässe (22 und 18) aufweist, mit einem halbmondförmigen, außermittig in die Rotationskammer eingehängten Strömungsleitblech (25), das sie in einen Innenrotationsbereich (24) und Außenrotationsbereich (20) teilt, und dem Lufteinlaß (19) und Außenbereich (20) erhitzte Frischluft zuführt, wo sie sich mit Heißgasen vermischt, und nach dem Auslaß (21), die im Innenbereich (24) rotierenden Verbrennungsgase nachverbrennt.

4.) Heizkessel nach Anspruch 1 bis 3, dadurch gekennzeichnet, daß im Luftvorwärmekanal (9), der das als Wärmetauscher ausgebildete Abgasrohr (8) umgibt, die Frischluft auf Abgastemperatur erhitzt, und dann dem Außenrotationsbereich (20) durch den Lufteinlaß (19), und dem Brenner (13) von dessen Gebläse (15)

zugeführt wird.

0273027

FIG. 2

FIG. 1